# DEMANDE DE BREVET EUROPEEN

(11) **EP 4 756 942 A1**
(43) Date de publication de la demande: **10.06.2026**
(21) Numéro de dépôt: 25220799.8
(22) Date de dépôt: 04.12.2025
(51) Int. Cl.: H01M 8/0662, H01M 8/04089, B60K 6/32, B60L 50/72, B60L 50/75, B60L 58/30, H01M 8/04082, H01M 8/04223, H01M 8/043, B60K 15/01, B60K 1/00, H01M 8/10

(54) **SYSTÈME MOTOPROPULSEUR POUR UN VÉHICULE AUTOMOBILE COMPRENANT UNE PILE À COMBUSTIBLE ET UN MOTEUR À COMBUSTION INTERNE**

(30) Priorité: 04.12.2024 FR 2413427
(71) Demandeur: AMPERE s.a.s., 92100 Boulougne-Billancourt (FR)
(72) Inventeur: GERARD, David, 78280 Guyancourt (FR)
(74) Mandataire: Renault Group

(57) **Abrégé**

Système motopropulseur (1) pour un véhicule automobile, comprenant :
- un réservoir (5) destiné à contenir de l'hydrogène,
- une pile à combustible (7), la pile à combustible comprenant un circuit anodique pourvu d'une première entrée (11) et d'une première sortie (12), un circuit cathodique pourvu d'une deuxième entrée (13) et d'une deuxième sortie (14),
- un moteur à combustion interne (4) comprenant une première entrée (41), une deuxième entrée (42), et une sortie d'échappement,
- une première conduite (51) reliant hydrauliquement la première entrée (11) de la pile à combustible à la deuxième entrée (13) de la pile à combustible, et
- une deuxième conduite (53) reliant hydrauliquement la deuxième sortie (14) de la pile à combustible à la première entrée (41) du moteur à combustion interne.

## Description

### Domaine Technique de l'invention

L'invention concerne un système motopropulseur pour un véhicule automobile, le système motopropulseur fonctionnant à base d'hydrogène. L'invention porte plus précisément sur un système motopropulseur comprenant une pile à combustible et un moteur à combustion interne, la pile à combustible et le moteur à combustion interne étant destinés à consommer de l'hydrogène. L'invention porte encore sur un véhicule automobile comprenant un tel système motopropulseur. L'invention porte également sur un procédé de contrôle d'un tel système motopropulseur.

### Etat de la technique antérieure

On connaît des véhicules automobiles équipés d'un système motopropulseur comprenant un réservoir d'hydrogène, une pile à combustible, une batterie électrochimique et un moteur électrique couplé à des roues motrices du véhicule. La pile à combustible est apte à produire un courant électrique grâce à une réaction chimique d'oxydoréduction entre de l'hydrogène en provenance du réservoir et de l'oxygène contenu dans l'air ambiant. Le courant électrique produit par la pile à combustible est utilisé pour charger la batterie électrochimique. La batterie électrochimique peut ensuite alimenter le moteur électrique en courant électrique de manière à produire un couple mécanique entraînant les roues motrices. Les avantages d'une telle solution sont un rendement très important à faible puissance et l'absence d'émissions polluantes.

On connaît également des véhicules automobiles équipés d'un système motopropulseur comprenant un réservoir d'hydrogène et un moteur à combustion interne couplé à des roues motrices du véhicule. Dans ce cas, l'hydrogène en provenance du réservoir est utilisé comme carburant pour faire fonctionner le moteur à combustion interne et ainsi générer un couple moteur entraînant les roues motrices du véhicule. Les avantages d'une telle solution sont de pouvoir générer de fortes puissances avec un rendement important. De plus, un tel moteur à combustion interne produit des émission polluantes en faible quantité comparativement à un moteur à combustion interne fonctionnant avec de l'essence ou du gazole.

On connaît également par la publication CN106541816A un véhicule automobile comprenant à la fois une pile à combustible et un moteur à combustion interne, la pile à combustible et le moteur à combustion interne étant tous les deux destinés à consommer de l'hydrogène. Ce système présente néanmoins une fiabilité et des performances insuffisantes. En particulier, la pile à combustible d'un tel système motopropulseur peut être rapidement endommagée si elle continue à être alimentée en hydrogène et en oxygène mais que le circuit électrique reliant l'anode à la cathode de la pile à combustible est ouvert, c'est-à-dire que le courant électrique produit par la pile à combustible n'est pas consommé.

### Présentation de l'invention

Le but de l'invention est de fournir un système motopropulseur remédiant aux inconvénients ci-dessus et améliorant les systèmes motopropulseurs connus de l'art antérieur.

Plus précisément, un premier objet de l'invention est un système motopropulseur plus performant et préservant le bon état d'une pile à combustible.

### Résumé de l'invention

L'invention se rapporte à un système motopropulseur pour un véhicule automobile, comprenant :
- un réservoir destiné à contenir de l'hydrogène,
- une pile à combustible destinée à produire un courant électrique par réaction chimique entre de l'hydrogène en provenance du réservoir et de l'oxygène, la pile à combustible comprenant un circuit anodique pourvu d'une première entrée pour apporter de l'hydrogène et d'une première sortie pour évacuer un excédent d'hydrogène, un circuit cathodique pourvu d'une deuxième entrée pour apporter de l'air chargé en oxygène et d'une deuxième sortie pour évacuer de l'air appauvri en oxygène et de l'eau,

- un moteur à combustion interne destiné à produire un couple d'entraînement par réaction chimique entre de l'hydrogène en provenance du réservoir et de l'oxygène, le moteur à combustion interne comprenant une première entrée pour apporter de l'hydrogène, une deuxième entrée pour apporter de l'air chargé en oxygène, et une sortie d'échappement pour évacuer des gaz d'échappement résultant de la combustion de l'hydrogène avec l'oxygène,
- une première conduite équipée d'une première vanne, la première conduite reliant hydrauliquement la première entrée de la pile à combustible à la deuxième entrée de la pile à combustible, et
- une deuxième conduite équipée d'une deuxième vanne, la deuxième conduite reliant hydrauliquement la deuxième sortie de la pile à combustible à la première entrée du moteur à combustion interne.

Le système motopropulseur peut comprendre en outre un moteur électrique destiné à produire un couple d'entraînement, le moteur électrique étant destiné à être alimenté directement ou indirectement par un courant électrique produit par la pile à combustible. Le système motopropulseur peut notamment comprendre une batterie électrochimique destinée à être rechargée par un courant électrique produit par la pile à combustible et le moteur électrique peut être destiné à être alimenté par un courant électrique issu de la batterie électrochimique.

Le système motopropulseur peut comprendre une troisième vanne comprenant une première entrée reliée hydrauliquement à la deuxième sortie de la pile à combustible et une première sortie débouchant vers l'air ambiant autour du système motopropulseur.

Le système motopropulseur peut comprendre une quatrième vanne comprenant une première entrée reliée hydrauliquement au réservoir, une première sortie reliée hydrauliquement à la première entrée de la pile à combustible, et une deuxième sortie reliée hydrauliquement à la première entrée du moteur à combustion interne.

Le système motopropulseur peut comprendre en outre une troisième conduite équipée d'une unité de recirculation, la troisième conduite reliant hydrauliquement la première sortie de la pile à combustible à la première entrée de la pile à combustible.

L'invention se rapporte également à un procédé de contrôle d'un système motopropulseur tel que défini précédemment, le procédé de contrôle comprenant :
- une détection d'un état de la pile à combustible dans lequel de l'hydrogène est présent dans le circuit anodique et de l'oxygène est présent dans le circuit cathodique, et dans lequel une anode et une cathode de la pile à combustible sont en circuit ouvert, puis
- une commande de la première vanne de sorte à ce qu'elle passe d'un état fermé à un état ouvert pour permettre l'arrivée d'hydrogène dans le circuit cathodique,
   et
- une commande de la deuxième vanne de sorte à ce qu'elle passe d'un état fermé à un état ouvert pour permettre l'arrivée de l'air chargé en oxygène et/ou de l'hydrogène présent dans le circuit cathodique dans le moteur à combustion interne.

Le procédé de contrôle peut comprendre, suite à la commande de la deuxième vanne de sorte à ce qu'elle passe d'un état fermé à un état ouvert pour permettre l'arrivée de l'air chargé en oxygène et/ou de l'hydrogène présent dans le circuit cathodique dans le moteur à combustion interne, un redémarrage du moteur à combustion interne pour brûler l'hydrogène en provenance du circuit cathodique de la pile à combustible

L'invention se rapporte également à véhicule automobile comprenant un système motopropulseur tel que défini précédemment.

Le véhicule automobile peut comprendre une unité de commande électronique connectée électriquement à la première vanne et à la deuxième vanne, l'unité de commande électronique comprenant une mémoire dans laquelle est enregistré un programme d'ordinateur comprenant des instructions de code de programme de mise en œuvre d'un procédé de contrôle tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un système motopropulseur selon un mode de réalisation de l'invention.
La figure 2 est une vue schématique d'une pile à combustible du système motopropulseur.

### Description détaillée

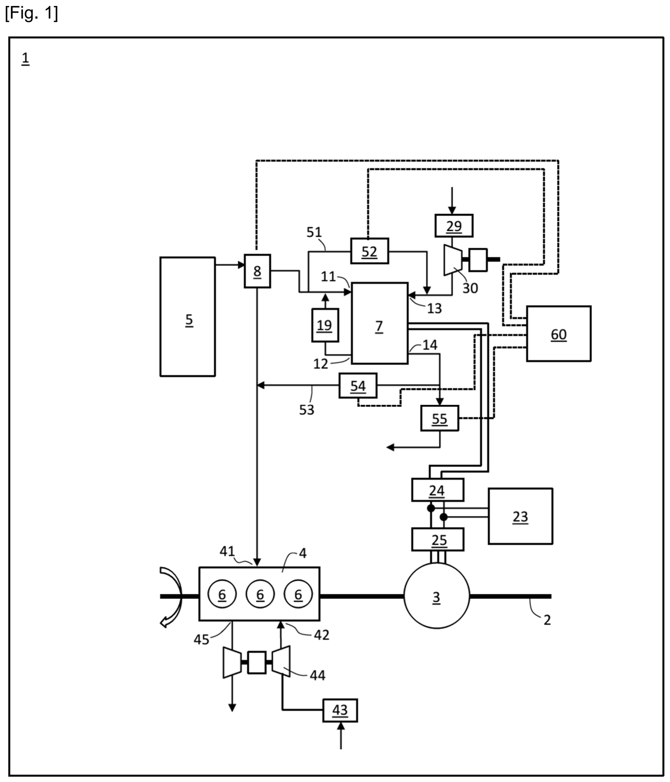

La figure 1 illustre schématiquement un système motopropulseur 1 pour un véhicule automobile selon un mode de réalisation de l'invention. Le système motopropulseur 1 peut, par exemple, être destiné à équiper un véhicule particulier, un véhicule utilitaire, un camion ou même un bus. Le système motopropulseur 1 est destiné à fournir un couple mécanique pour entraîner en rotation des roues motrices du véhicule pour faire avancer (ou reculer) le véhicule. A cet effet, le système motopropulseur 1 comprend au moins un arbre rotatif 2 destiné à être couplé aux roues motrices du véhicule.

Le système motopropulseur 1 comprend deux moteurs : d'une part le système motopropulseur 1 comprend un moteur électrique 3, c'est-à-dire un moteur destiné à être alimenté en énergie électrique pour produire un couple de rotation. D'autre part, le système motopropulseur 1 comprend un moteur à combustion interne 4, c'est à dire un moteur apte à transformer l'énergie produite par la combustion d'un gaz en un couple de rotation.

Selon le mode de réalisation présenté, le moteur électrique 3 et le moteur à combustion interne 4 sont couplé au même arbre rotatif 2, lui-même en liaison mécanique avec deux roues motrices (avant ou arrière), voire avec quatre roues motrices du véhicule. Selon un mode de réalisation alternatif, le moteur électrique 3 et le moteur à combustion interne 4 pourraient être couplés à des roues motrices différentes. Par exemple, le moteur électrique 3 pourrait être couplé à des roues motrices avant et le moteur à combustion interne 4 pourrait être couplé à des roues motrices arrière, ou inversement. Selon un mode de réalisation, les couples produits par les deux moteurs 3 et 4 sont destinés à s'additionner pour obtenir un couple résultant de plus grande valeur. Alternativement, le système motopropulseur 1 pourrait être configuré de sorte que seul l'un des deux moteurs 3 ou 4 entraîne des roues motrices du véhicule à chaque instant.

En outre, le système motopropulseur 1 comprend un réservoir 5 d'hydrogène (notamment sous la forme de dihydrogène). L'hydrogène contenu dans le réservoir 5 est destiné à être utilisé directement ou indirectement comme source d'énergie pour faire fonctionner les moteurs 3 et 4. Le réservoir 5 peut, par exemple, prendre la forme d'une ou plusieurs bonbonnes embarquées dans le véhicule. L'hydrogène peut être stocké sous pression dans le réservoir 5.

Le moteur à combustion interne 4 comprend un ensemble de chambres de combustion 6, par exemple trois chambres de combustion comme cela est représenté sur la figure 1, ou en variante tout autre nombre de chambres de combustion. Le moteur à combustion interne 4 comprend une première entrée 41 pour apporter de l'hydrogène dans chaque chambre de combustion 6. La première entrée 41 est reliée au réservoir 5 par une conduite hydraulique. Le moteur à combustion interne 4 peut comprendre des dispositifs d'injection d'hydrogène aptes à injecter une quantité d'hydrogène donnée à un instant précis dans chaque chambre de combustion. Le moteur à combustion interne 4 comprend également une deuxième entrée 42 pour apporter de l'air chargé d'oxygène (notamment sous la forme de dioxygène) dans chaque chambre de combustion. La deuxième entrée 42 peut être une simple arrivée d'air en provenance de l'air environnant le système motopropulseur 1 puisque l'air ambiant contient naturellement une importante proportion d'oxygène. Avantageusement, comme cela est représenté sur la figure 1, la deuxième entrée du moteur à combustion interne 4 est équipée d'un filtre à air 43 et/ou un compresseur d'air 44, notamment un turbocompresseur d'air. Chaque chambre de combustion 6 peut également être équipée d'un dispositif d'allumage tel qu'une bougie d'allumage. Chaque chambre de combustion est ainsi destinée à être le siège de la réaction chimique exothermique suivante :

2H₂ + O₂ → 2H₂O + énergie

L'énergie générée par cette réaction chimique permet de déplacer un piston dans la chambre de combustion. Le déplacement de chaque piston entraine la rotation d'un vilebrequin solidaire de l'arbre rotatif 2, par l'intermédiaire d'une bielle.

En complément de la production d'énergie, la combustion de l'hydrogène produit également de l'eau (H₂O). L'eau est mélangée aux gaz d'échappement et évacuée hors du moteur à combustion interne 4 par une sortie d'échappement 45 du moteur à combustion interne 4. Les gaz d'échappement contiennent donc principalement de l'air appauvri en oxygène et de l'eau, notamment sous forme de vapeur. Les gaz d'échappement peuvent être évacués dans l'atmosphère. En outre, l'énergie cinétique des gaz d'échappement du moteur à combustion peut être utilisé pour entraîner le compresseur d'air 44.

Le système motopropulseur 1 comprend par ailleurs une pile à combustible 7. La pile à combustible 7 est un générateur électrochimique produisant une tension électrique grâce à l'oxydation sur une électrode d'un combustible réducteur (en l'espèce de l'hydrogène) couplée à la réduction sur l'autre électrode d'un oxydant (en l'espèce de l'oxygène). Une pile à combustible présente donc un fonctionnement totalement différent d'un moteur à combustion interne puisqu'elle est destinée à produire un courant électrique, et non une force ou un couple mécanique.

Le système motopropulseur 1 comprend également une batterie électrochimique 23, par exemple de type « lithium-ion », destinée à être rechargée par un courant électrique produit par la pile à combustible 7. Le moteur électrique 3 est destiné à être alimenté par un courant électrique issu de la batterie électrochimique 23. Ceci permet de faire fonctionner la pile à combustible 7 à un régime de fonctionnement optimal, indépendant du couple demandé au moteur électrique 3. La pile à combustible 7 peut ainsi être connectée électriquement à la batterie électrochimique 23 par un premier convertisseur 24 électrique, notamment de type DC/DC. La batterie électrochimique 23 peut être connectée électriquement au moteur électrique 3 par un deuxième convertisseur 25 électrique, notamment de type DC/AC. Le premier convertisseur 24 peut également être connecté directement au deuxième convertisseur 25 de sorte que le courant électrique produit par la pile à combustible 7 est directement consommé par le moteur électrique 3. Selon une variante de réalisation de l'invention, le système motopropulseur 1 pourrait être dépourvu de batterie électrochimique 23. Le moteur électrique 3 serait alors alimenté directement par un courant électrique issu de la pile à combustible, sans stockage préalable de l'énergie électrique produite par la pile à combustible sous une forme chimique. Dans cette hypothèse, les deux convertisseurs 24, 25 pourraient être remplacés par un unique convertisseur, notamment de type DC/AC, interposé entre la pile à combustible 7 et le moteur électrique 3.

La pile à combustible 7 est avantageusement de type « à membrane échangeuse de protons », connue également sous le nom de « PEMFC », pour l'anglais « proton exchange membrane fuel cells ». La pile à combustible 7 comprend un circuit anodique pourvu d'une première entrée 11 pour apporter de l'hydrogène et d'une première sortie 12 pour évacuer un excédent d'hydrogène. La pile à combustible 7 comprend également un circuit cathodique pourvu d'une deuxième entrée 13 pour apporter de l'air chargé en oxygène et d'une deuxième sortie 14 pour évacuer de l'air appauvri en oxygène et de l'eau. Avantageusement, comme cela est représenté sur la figure 1, la deuxième entrée 13 peut être équipée d'un filtre à air 29 et/ou d'un compresseur d'air 30, notamment un compresseur d'air électrique.

La première entrée 11 de la pile à combustible 7 et la première entrée 41 du moteur à combustion interne 4 sont donc toutes les deux reliées hydrauliquement au réservoir 5. Le système motopropulseur 1 comprend une vanne 8 comprenant une entrée reliée au réservoir 5, une première sortie reliée à la première entrée 41 du moteur à combustion interne, et une deuxième sortie reliée à la première entrée 11 de la pile à combustible. La vanne 8 peut être contrôlée de sorte à alimenter en hydrogène uniquement la pile à combustible ou uniquement le moteur à combustion interne ou simultanément la pile à combustible et le moteur à combustion interne. La vanne 8 peut être de préférence une électrovanne connectée électriquement à une unité de contrôle électronique 60 embarquée dans le véhicule.

En remarque, l'excédent d'hydrogène au niveau de la première sortie 12 peut être avantageusement réinjecté dans la pile à combustible 7 par la première entrée 11 par une unité de recirculation 19, par exemple une pompe.

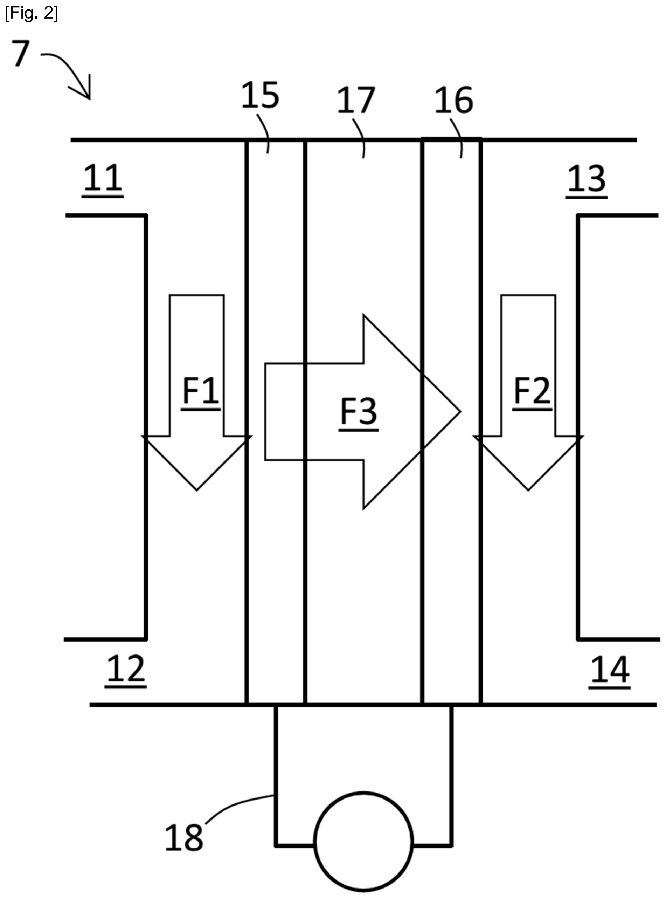

La pile à combustible 7 comprend un empilement de cellules en série, généralement dénommé par l'anglicisme « stack ». La figure 2 illustre un mode de réalisation d'une cellule de la pile à combustible 7. Chaque cellule comprend une anode 15 en contact avec le circuit anodique, une cathode 16 en contact avec le circuit cathodique, et une membrane 17 séparant l'anode 15 et la cathode 16. La membrane 17 est perméable aux protons H+ mais imperméable aux électrons. L'anode 15 et la cathode 16 de chaque cellule sont connectées en série à un circuit électrique 18.

Lorsque de l'hydrogène et de l'oxygène sont apportés dans la pile à combustible 7 respectivement par la première entrée 11 et par la deuxième entrée 13, il se produit d'une part une réaction d'oxydation de l'hydrogène au niveau du circuit anodique dont la formule chimique est :

H₂ → 2H⁺ + 2e-

D'autre part, les protons H+ traversent la membrane 17 de chaque cellule et se combinent avec des électrons et de l'oxygène pour former des molécules d'eau selon la réaction chimique suivante :

4H⁺ 4e⁻ + O₂ → 2 H₂O

L'anode de chaque cellule atteint ainsi un potentiel électrique négatif tandis que la cathode de chaque cellule atteint un potentiel électrique positif. Il se crée ainsi une différence de potentiel électrique entre l'anode et la cathode de chaque cellule. Les cellules étant assemblées en série, les différences de potentiel entre leur anode et leur cathode s'additionnent. On parvient ainsi à établir une tension électrique de plusieurs centaines de volts aux bornes du circuit électrique 18. Comme nous le verrons par la suite, le courant électrique produit par la pile à combustible peut servir à alimenter directement le moteur électrique 3 et/ou à recharger une batterie électrochimique. Sur la figure 2, on a identifié par une première flèche F1 le parcours de l'hydrogène, par une deuxième flèche F2 le parcours de l'air, et par une troisième flèche F3 le parcours des protons H+.

La membrane 17 doit remplir de nombreuses fonctions : elle doit conduire les ions hydrogène (protons), mais pas les électrons, ce qui créerait un court-circuit dans la pile à combustible. La membrane 17 ne doit pas non plus permettre le passage des gaz d'un côté à l'autre de la pile à combustible, pour éviter le phénomène connu sous le nom de « gas crossover » (croisement de gaz). Enfin, la membrane doit résister à un environnement réducteur à l'anode et, en même temps, à un environnement oxydant à la cathode. La membrane 17 peut être, par exemple, un membrane polymère. Selon un mode de réalisation, la membrane 17 comprend des alkyls perfluorés et polyfluorés (PFAS). La membrane 17 peut être par exemple une membrane en NAFION^{®} ou équivalent. Selon un autre mode de réalisation, la membrane 17 peut comprendre un polymère hydrocarboné sans PFAS. Ces dernières présentent l'avantage d'être plus résistantes aux hautes températures. Elles peuvent notamment supporter des températures de l'ordre de 100°C à 150°C, ce qui permet de faire fonctionner la pile à combustible à une température plus élevée.

Lorsqu'aucun courant ne circule dans le circuit électrique 18, la pile à combustible 7 est dite en « circuit ouvert ». Dans cet état, il s'avère très important de stopper les réactions chimiques à l'intérieur de la pile à combustible 7. En effet, ces réactions chimiques pourraient entraîner une corrosion ou une dégradation des matériaux de la pile à combustible 7, notamment des électrodes 15, 16 et de la membrane 17.

Afin d'éviter la poursuite des réactions chimique dans la pile à combustible lorsque celle-ci est en circuit ouvert, le système motopropulseur 1 comprend une première conduite 51 hydraulique équipée d'une première vanne 52, la première conduite 51 reliant hydrauliquement la première entrée 11 de la pile à combustible à la deuxième entrée 13 de la pile à combustible. La première vanne 52 peut être commandée de sorte à être soit dans un état passant, soit dans un état bloqué. Lorsque la première vanne 52 est dans un état bloqué, les deux entrées 11, 13 de la pile à combustible sont isolées l'une de l'autre et la pile à combustible peut fonctionner normalement comme cela a été décrit précédemment. Lorsque la première vanne 52 est dans un état passant, les deux entrées 11, 13 de la pile à combustible sont reliées hydrauliquement l'une à l'autre. Il se produit alors un équilibrage des gaz présent au niveau des deux entrées 11, 13 qui empêche la poursuite des réactions chimiques. En particulier, de l'hydrogène est ainsi apporté dans le circuit cathodique via la première conduite hydraulique 51. La première conduite 51 associée à la première vanne 52 à l'état ouvert permet donc d'éviter un endommagement de la pile à combustible 7 lorsque celle-ci est en circuit ouvert. La première vanne 52 peut avantageusement être une électrovanne connectée électriquement à l'unité de contrôle électronique 60 embarquée dans le véhicule. La préservation de la pile à combustible requiert ainsi la consommation d'une petite quantité d'hydrogène pour équilibrer les circuits anodique et cathodique.

Avantageusement, le système motopropulseur 1 comprend également une deuxième conduite 53 hydraulique équipée d'une deuxième vanne 54, la deuxième conduite 53 reliant hydrauliquement la deuxième sortie 14 de la pile à combustible à la première entrée 41 du moteur à combustion interne. La deuxième vanne 54 peut également être commandée de sorte à être soit dans un état passant, soit dans un état bloqué. La deuxième vanne 54 peut avantageusement être une électrovanne connectée électriquement à l'unité de contrôle électronique 60. Lorsque la première vanne 52 est dans un état passant, la deuxième sortie 14 de la pile à combustible est reliée hydrauliquement à la première entrée 41 du moteur à combustion interne 4. La deuxième conduite 53 associée à la deuxième vanne 54 à l'état ouvert permet de consommer dans le moteur à combustion interne4 l'hydrogène qui a été apportée dans le circuit cathodique pour stopper les réactions chimiques dans la pile à combustible 7 comme décrit précédemment. LA faible quantité d'hydrogène qui a été utilisée à cet effet n'est donc pas perdue puisqu'elle peut être utilisée par le moteur à combustion interne pour produire un couple d'entraînement utile pour faire avancer le véhicule. En outre, en brûlant l'hydrogène dans le moteur à combustion interne 4, on évite de relarguer dans l'atmosphère de l'hydrogène, ce qui pourrait être dangereux dans certaines circonstances.
le système motopropulseur 1 comprend également une troisième vanne 55, notamment une vanne d'échappement, comprenant une première entrée reliée hydrauliquement à la deuxième sortie 14 de la pile à combustible et une première sortie débouchant vers l'air ambiant autour du système motopropulseur 1. La troisième vanne 55 peut également être commandée de sorte à être soit dans un état passant, soit dans un état bloqué. La troisième vanne 55 peut avantageusement être une électrovanne connectée électriquement à l'unité de contrôle électronique 60. Selon une variante de réalisation la deuxième vanne 54 et la troisième vanne 55 pourrait être remplacées par une unique vanne comprenant deux sorties : une première sortie reliée hydrauliquement à l'entrée 41 du moteur à combustion interne et une deuxième sortie vers l'air environnant le système motopropulseur.

Lorsque la pile à combustible 7 fonctionne normalement, c'est-à-dire avec une circulation de courant électrique entre l'anode et la cathode, la deuxième vanne 54 est dans un état bloqué et la troisième vanne 55 est dans un état ouvert. Seul de l'air appauvri en oxygène est alors évacué hors du circuit cathodique vers l'air ambiant autour du système motopropulseur 1.

L'unité de contrôle électronique 60 comprend un microprocesseur 61 et une mémoire 62. La mémoire 62 est un support d'enregistrement de données sur lequel est enregistré un programme d'ordinateur comprenant des instructions de code de programme de mise en œuvre d'un procédé de contrôle du système motopropulseur 1 selon un mode de réalisation de l'invention. Le microprocesseur 41 est apte à exécuter ce programme d'ordinateur.

Au début de la mise en œuvre du procédé de contrôle, on suppose que la pile à combustible fonctionne normalement : c'est-à-dire qu'elle est alimentée en hydrogène par sa première entrée 11 et en oxygène par sa deuxième entrée 13. La vanne 8 alimente est dans une configuration où elle alimente la pile à combustible 7 et éventuellement également le moteur à combustion 4. La première vanne 52 et la deuxième vanne 54 sont fermées, la troisième vanne 55 est ouverte. La pile à combustible produit alors un courant électrique alimentant le moteur électrique 3 et/ou la batterie électrochimique 23.

Le procédé de contrôle comprend tout d'abord une détection d'un état de la pile à combustible dans lequel de l'hydrogène est présent dans le circuit anodique et de l'oxygène est présent dans le circuit cathodique, et dans lequel l'anode et la cathode de la pile à combustible sont en circuit ouvert. Un tel état peut survenir, par exemple, si la batterie électrochimique 23 est complètement rechargée et que le moteur électrique 3 ne fournit aucun couple, par exemple parce que le conducteur du véhicule n'appuie plus sur la pédale d'accélérateur du véhicule. Cette détection peut être réalisée en surveillant l'état de variables numériques relatives à l'état de charge de la batterie électrochimique 23 et au couple demandé au moteur électrique 3. Alternativement ou en complément, cette détection peut être réalisée plus directement en mesurant le courant électrique circulant dans le circuit électrique 18.

Consécutivement à cette détection, on commande la première vanne 52 de sorte qu'elle passe d'un état fermé à un état ouvert pour permettre l'arrivée d'hydrogène dans le circuit cathodique. Simultanément ou quasiment simultanément, on commande la deuxième vanne 54 de sorte qu'elle passe d'un état fermé à un état ouvert, et la troisième vanne de sorte qu'elle passe d'un état ouvert à un état fermé. L'hydrogène apporté dans le circuit cathodique par la première conduite 51 chasse l'air chargé d'oxygène qui y était présent. L'air chargé d'oxygène, auquel est éventuellement mêlé une quantité d'hydrogène, est évacué vers le moteur à combustion interne par la deuxième conduite 53 via la deuxième sortie 14.

Dans l'hypothèse où le moteur à combustion interne 4 fonctionne déjà à l'instant ou la deuxième vanne 54 est ouverte, le mélange d'air et d'hydrogène en provenance du circuit cathodique de la pile à combustible peut s'ajouter à l'hydrogène acheminé directement depuis le réservoir 5 vers le moteur à combustion interne. Alternativement, l'alimentation directe en hydrogène du moteur à combustion peut être coupé grâce à la vanne 8, et la totalité de l'hydrogène apporté au moteur à combustion interne peut être apporté via le circuit cathodique et la deuxième vanne 54. La proportion d'hydrogène et d'oxygène dans les chambres de combustion 6 peut être affectée pendant un court instant, ce qui n'est pas gênant.

Dans l'hypothèse où le moteur à combustion interne 4 serait inactif à l'instant de ladite détection d'un état de circuit ouvert de la pile à combustible, on peut avantageusement commander le redémarrage du moteur à combustion interne pour brûler l'hydrogène en provenance du circuit cathodique de la pile à combustible. Le moteur à combustion interne 4 peut être activé un court instant, par exemple de l'ordre de quelques secondes, avant d'être à nouveau désactivé. On éviter ainsi d'évacuer de l'hydrogène dans l'air ambiant.

Lors de la prochaine commande de démarrage de la pile à combustible 7, de l'oxygène est introduit dans le circuit cathodique afin d'éliminer l'hydrogène encore présent et permettre ainsi le redémarrage de la pile à combustible.

## Revendications

1. Système motopropulseur (1) pour un véhicule automobile, comprenant :
- un réservoir (5) destiné à contenir de l'hydrogène,
- une pile à combustible (7) destinée à produire un courant électrique par réaction chimique entre de l'hydrogène en provenance du réservoir et de l'oxygène, la pile à combustible comprenant un circuit anodique pourvu d'une première entrée (11) pour apporter de l'hydrogène et d'une première sortie (12) pour évacuer un excédent d'hydrogène, un circuit cathodique pourvu d'une deuxième entrée (13) pour apporter de l'air chargé en oxygène et d'une deuxième sortie (14) pour évacuer de l'air appauvri en oxygène et de l'eau,
- un moteur à combustion interne (4) destiné à produire un couple d'entraînement par réaction chimique entre de l'hydrogène en provenance du réservoir et de l'oxygène, le moteur à combustion interne comprenant une première entrée (41) pour apporter de l'hydrogène, une deuxième entrée (42) pour apporter de l'air chargé en oxygène, et une sortie d'échappement pour évacuer des gaz d'échappement résultant de la combustion de l'hydrogène avec l'oxygène,
- une première conduite (51) équipée d'une première vanne (52), la première conduite reliant hydrauliquement la première entrée (11) de la pile à combustible à la deuxième entrée (13) de la pile à combustible, et
- une deuxième conduite (53) équipée d'une deuxième vanne (54), la deuxième conduite reliant hydrauliquement la deuxième sortie (14) de la pile à combustible à la première entrée (41) du moteur à combustion interne.

2. Système motopropulseur selon la revendication précédente, **caractérisé en ce qu'**il comprend en outre un moteur électrique (3) destiné à produire un couple d'entraînement, le moteur électrique étant destiné à être alimenté directement ou indirectement par un courant électrique produit par la pile à combustible (7), notamment **en ce que** le système motopropulseur comprend une batterie électrochimique (23) destinée à être rechargée par un courant électrique produit par la pile à combustible et **en ce que** le moteur électrique est destiné à être alimenté par un courant électrique issu de la batterie électrochimique.

3. Système motopropulseur selon l'une des revendications précédentes, **caractérisé en ce qu'**il comprend une troisième vanne (55) comprenant une première entrée reliée hydrauliquement à la deuxième sortie (14) de la pile à combustible et une première sortie débouchant vers l'air ambiant autour du système motopropulseur.

4. Système motopropulseur selon l'une des revendications précédentes, **caractérisé en ce qu'**il comprend une quatrième vanne (8) comprenant une première entrée reliée hydrauliquement au réservoir (5), une première sortie reliée hydrauliquement à la première entrée (11) de la pile à combustible (7), et une deuxième sortie reliée hydrauliquement à la première entrée (41) du moteur à combustion interne (4).

5. Système motopropulseur selon l'une des revendications précédentes, **caractérisé en ce qu'**il comprend en outre une troisième conduite équipée d'une unité de recirculation (19), la troisième conduite reliant hydrauliquement la première sortie de la pile à combustible à la première entrée de la pile à combustible.

6. Procédé de contrôle d'un système motopropulseur (1) selon l'une des revendications précédentes, **caractérisé en ce qu'**il comprend :
- une détection d'un état de la pile à combustible (7) dans lequel de l'hydrogène est présent dans le circuit anodique et de l'oxygène est présent dans le circuit cathodique, et dans lequel une anode et une cathode de la pile à combustible sont en circuit ouvert,
puis
- une commande de la première vanne (52) de sorte à ce qu'elle passe d'un état fermé à un état ouvert pour permettre l'arrivée d'hydrogène dans le circuit cathodique,
et
- une commande de la deuxième vanne (54) de sorte à ce qu'elle passe d'un état fermé à un état ouvert pour permettre l'arrivée de l'air chargé en oxygène et/ou de l'hydrogène présent dans le circuit cathodique dans le moteur à combustion interne.

7. Procédé de contrôle selon la revendication précédente, **caractérisé en ce qu'**il comprend, suite à la commande de la deuxième vanne (54) de sorte à ce qu'elle passe d'un état fermé à un état ouvert pour permettre l'arrivée de l'air chargé en oxygène et/ou de l'hydrogène présent dans le circuit cathodique dans le moteur à combustion interne, un redémarrage du moteur à combustion interne (4) pour brûler l'hydrogène en provenance du circuit cathodique de la pile à combustible

8. Véhicule automobile comprenant un système motopropulseur (1) selon l'une des revendications 1 à 5.

9. Véhicule automobile selon la revendication précédente, **caractérisé en ce qu'**il comprend une unité de commande électronique (60) connectée électriquement à la première vanne (52) et à la deuxième vanne (54), l'unité de commande électronique comprenant une mémoire (62) dans laquelle est enregistré un programme d'ordinateur comprenant des instructions de code de programme de mise en œuvre d'un procédé de contrôle selon l'une des revendications 6 ou 7.
